# EUROPÄISCHE PATENTSCHRIFT

(11) **EP 1 181 440 B1**
(45) Veröffentlichungstag und Bekanntmachung des Hinweises auf die Patenterteilung: **19.03.2003**
(21) Anmeldenummer: 00943729.4
(22) Anmeldetag: 22.05.2000
(51) Int. Cl.: F01P 11/02, F01P 3/22

(54) **VERSCHLUSSDECKEL FÜR KRAFTFAHRZEUGKÜHLER**
CLOSURE CAP FOR A MOTOR VEHICLE RADIATOR
BOUCHON POUR RADIATEUR DE VEHICULE AUTOMOBILE

(30) Priorität: 22.05.1999 DE 19923775
(43) Veröffentlichungstag der Anmeldung: 27.02.2002
(60) Teilanmeldung: 01130526.5
(73) Patentinhaber: REUTTER, Heinrich, 71336 Waiblingen-Hohenacker (DE)
(72) Erfinder: REUTTER, Heinrich, 71336 Waiblingen-Hohenacker (DE)
(74) Vertreter: Fuhlendorf, Jörn, Dipl.-Ing.
(86) Internationale Anmeldenummer: EP0004661
(87) Internationale Veröffentlichungsnummer: WO00071872

(56) Entgegenhaltungen:
- EP-A- 0 287 450
- DE-A- 19 705 036
- DE-A- 19 753 597

## Beschreibung

Die vorliegende Erfindung bezieht sich auf einen Verschlußdeckel für einen ortsfesten Stutzen eines Behälters, insbesondere Kraftfahrzeugkühlers, nach dem Oberbegriff des Anspruchs 1. Ein derartiger verschlußdeckel ist aus der EP-A-0 287 450 bekannt.

Bei bekannten Verschlußdeckeln für beispielsweise Kraftfahrzeugkühler ist der Ventilkörper der Ventilanordnung in konstanter Weise derart beaufschlagt, daß die Strömungsverbindung zwischen dem Kühlerinneren und dem Kühleräußeren dann geöffnet wird, wenn ein bestimmter Grenzwert des Kühlerinnendrucks überschritten wird. Dies führt dann zu einem Ablassen von mit Kühlwasser durchsetzter Luft. Solche einfachen Verschlußdeckel sorgen während des Betriebs des Kraftfahrzeugs für einen Druckausgleich dann, wenn der Druck durch die Erwärmung des Kühlwassers in dem Kühler ansteigt und ein kritischer Druckwert erreicht oder überschritten wird. Dies ist ein Sicherheitsaspekt. Bei Kraftfahrzeugkühlern steigt jedoch dann, wenn das Fahrzeug abgestellt wird, das heißt, der Motor abgeschaltet wird, der Überdruck durch Stauwärme ebenfalls an, so daß bei den genannten einfachen Verschlußdeckeln ebenfalls ein vollständiges Öffnen stattfindet und die Gefahr besteht, daß eine große Menge Kühlwasser austritt beziehungsweise verdunstet oder der Kühler gar leerkocht und damit häufig Kühlwasser nachgefüllt werden muß. Zu diesem Zweck wurden mehrstufige Verschlußdeckel entwickelt (DE 4107 525 C 1), die den durch Stauwärme erzeugten Überdruck anders abbauen als einen durch Fehlfunktionen auftretenden, wesentlich höheren Überdruck. Ein derartiger Verschlußdeckel ist jedoch aufgrund mehrerer gegeneinander bewegbarer Vencilkörperteile und mehrerer Dicht- und Gegendichtflächen relativ aufwendig. Außerdem wird auch bei einem durch Stauwärme nach Abschalten des Fahrzeugmotors erreichten Überdrucks Kühlwasser durch das Druckablassen versprüht. Ein absoluter Wasserverlust kann in diesem Falle nur vermieden werden, wenn ein Ausgleichsbehälter zum Auffangen der Flüssigkeit eingebaut oder eine zusätzliche Umwälzpumpe, welche beim Abstellen des Motors einen Druckanstieg durch Umwälzen des Kühlmittels verhindert, verwendet wird. Dies ist jedoch kostenaufwendig.

Aufgabe der vorliegenden Erfindung ist es deshalb, einen Verschlußdeckel der eingangs genannten Art zu schaffen, mit dem einerseits ein Öffnen bei einein durch Stauwärme erzeugten Überdruck in einfacher und kostengünstiger Weise verhindert ist und mit dem andererseits nach wie vor sichergestellt ist, daß der Behälter bei weiterem Ansteigen des Drucks geschützt ist.

Zur Lösung dieser Aufgabe sind bei einem Verschlußdeckel der eingangs genannten Art die im Anspruch 1 angegebenen Merkmale vorgesehen.

Durch die erfindungsgemäßen Maßnahmen ist erreicht, daß die Vorspannung auf den Ventilkörper in Abhängigkeit vom Betrieb des beispielsweise Kraftfahrzeugs derart gesteuert werden kann, daß der Verschlußdeckel bei einem durch Stauwärme erzeugten definiertem Überdruck nicht öffnet. Dadurch ist ein Ablassen von mit Kühlwasser vermischter Luft für diese "Betriebsphase" verhindert. Zusätzlicher Bauteile, wie Ausgleichsbehälter oder Umwälzpumpe bedarf es hierbei nicht. Der Überdruck kann durch Abkühlen des Kraftfahrzeugkühlers während des Stillstands erreicht werden. Dennoch wird der Verschlußdeckel bei einem weiteren Druckanstieg über eine bestimmte Sicherheitsgrenze hinaus öffnen, um das Kühlsystem durch Platzen, sich ergebende Undichtheiten, auch in den Verbindungsschläuchen, nicht zu gefährden. Beispielsweise kann die Vorspannung zweistufig, das heißt auf einen den Normalbetrieb entsprechenden Öffnungsdruck und auf einen den Druckanstieg bei Stauwärme berücksichtigenden höheren öffnungsdruck eingestellt werden. Die Einstellung der Vorspannung für den Ventilkörper kann entsprechend den Merkmalen des Ansprüchs 2 erfolgen, was bedentet, dass die Steuergröße unmittelbar aus dem Motorraum von Otto-Motoren beziehungsweise Dieselmotoren abgenommen werden kann.

Vorteilhafte Ausgestaltungen bezüglich der mechanischen Vorspannung des Ventilkörpers ergeben sich durch die Merkmale des Anspruchs 3 oder 4.

Der Antrieb selbst kann in unterschiedlicher Weise ausgebildet sein, wie es beispielsweise die Merkmale gemäß Anspruch 5 oder 8 zeigen. Im ersteren Falle ist ein auf den Unterdruck reagierender mechanischer Kolben und im zweiten Falle eine durch den Unterdruck bewegbare Membrananordnung gegeben.

Ausgestaltungen zu den einzelnen Antriebsarten ergeben sich durch die Merkmale nach den Ansprüchen 6 und 7 bzw. 9 und 10,

Wenn gemäß den Merkmalen des Anspruchs 11 eine feste Verbindung zwischen Unterdruckschlauch und Verschlußdeckel vorhanden ist, ist es vorteilhaft, das Lösen bzw. Aufdrehen des Verschlußdeckels auf den Behälterstutzen entsprechend den Merkmalen eines oder mehrerer der Ansprüche 12 bis 18 auszugestalten.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer, längsgeschnittener Darstellung (gemäß Linie I - I der Figur 2 A) einen Verschlußdeckel für Kraftfahrzeugkühler gemäß einem ersten Ausführungsbeispiel vorliegender Erfindung in einer ersten Stellung,
- Figur 2 A und 2 B: eine teilweise geschnittene Draufsicht gemäß Pfeil II A gemäß Figur 1 bzw. einen Schnitt längs der Linie II B - II B der Figur 1,
- Figuren 3 A und 3 B: in perspektivischer Ansicht bzw. teilweise geschnittener Seitenansicht einen Verschlußdeckel für Kraftfahrzeugkühler gemäß einem zweiten Ausführungsbeispiel vorliegender Erfindung,
- Figuren 4 und 5: in schematischer, längsgeschnittener Darstellung den Verschlußdeckel gemäß dem zweiten Ausführungsbeispiel in einer ersten bzw. in einer zweiten aktiven Stellung,
- Figuren 6 und 7: eine den Figuren 4 und 5 entsprechende Darstellung, jedoch eines Verschlußdeckels gemäß einem dritten Ausführungsbeispiel vorliegender Erfindung, und
- Figuren 8 A und 8 B: einen Schnitt längs der Linie VIII A - VIII A der Figur 6 beziehungsweise einen Schnitt längs der Linie VIII B - VIII B der Figur 7,

Der in der Zeichnung gemäß vier Ausführungsbeispielen dargestellte Verschlußdeckel 10, 110 bzw. 210 weist eine Überdruckventilanordnung 11 auf und ist in der Weise angesteuert, daß der Öffnungsdruck der Überdruckventilanordnung 11 mittels eines Antriebs 15, 115 bzw. 215 zweistufig eingestellt werden kann, nämlich auf einen den Kraftfahrzeugkühlerüberdruck bei Normalbetrieb berücksichtigenden Öffnungsdruck und auf einen solchen Öffnungsdruck, der den höheren Kraftfahrzeugkühlerüberdruck, der sich beim Abstellen des Kraftfahrzeugmotors aufgrund der sich entwickelnden Stauwärme ergibt, entspricht.

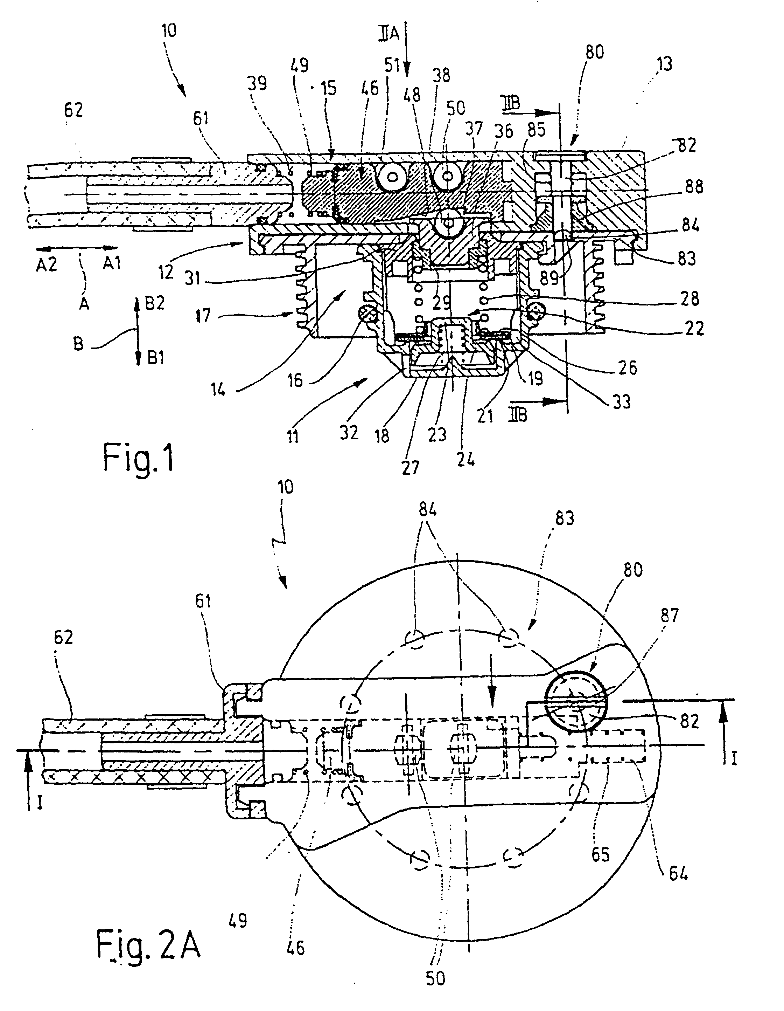

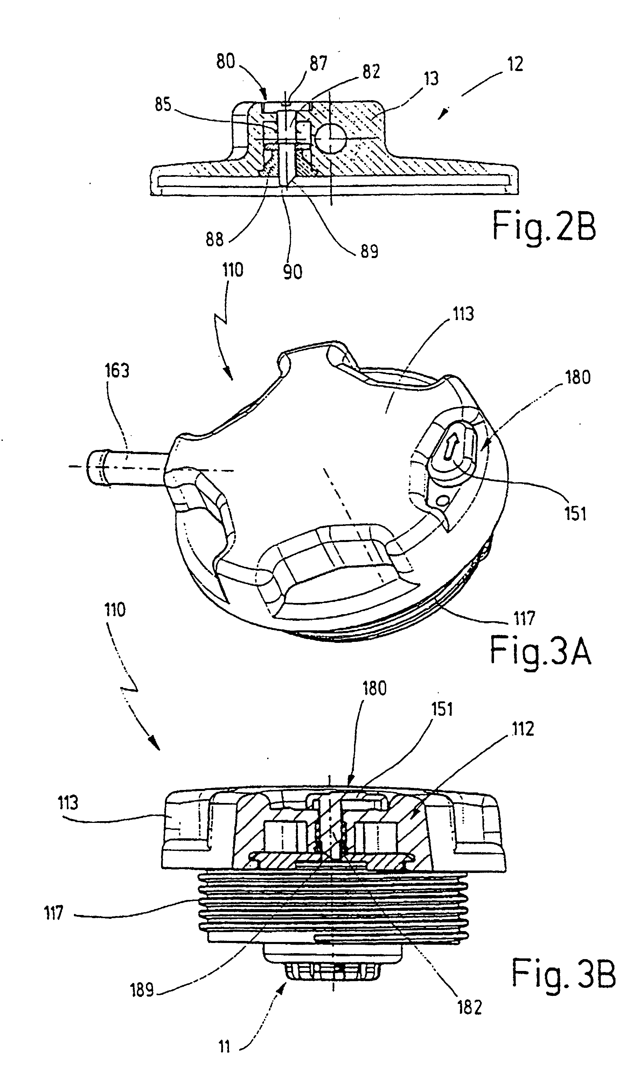

Gemäß den Figuren 1 und 2 A, 2 B besitzt der Verschlußdeckel 10 einen Außenteil 12 mit einer Handhabe 13 und einem Außengewindeteil 17 zum Auf- und Abschrauben des Verschlußdeckels 10 von der Öffnung eines Stutzens eines nicht dargestellten Kraftfahrzeugkühlers oder sonstigen Behälters und einen Innenteil 14, der über einen O-Ring 16 dichtend in den Stutzen des Kraftfahrzeugkühlers oder eines sonstigen Behälters einsetzbar und am Außenteil 12 gehalten ist. Die Handhabe 13 ist mit dem Außengewindeteil 17 entweder starr oder verriegelbar verdrehbar verbunden, wobei eine druck-, vorzugsweise jedoch eine temperaturabhängig arbeitende Verdrehsicherung vorgesehen sein kann. Es versteht sich, daß der Außenteil 12 statt mit einem Außengewindeteil 17 auch mit einem Bajonettverschlußteil versehen sein kann.

Der zylindrisch ausgebildete Innenteil 14 des Verschlußdeckels 10 ist mit der Überdruckventilanordnung 11 bestückt. Er besitzt einen Boden 18 und oberhalb des Bodens einen nach innen ragenden Ringrand 19, dessen oberer Bereich mit einem Dichtsitz 21 für einen Ventilkörper 22 der Überdruckventilanordnung 11 versehen ist. Der Ventilkörper 22 besitzt ein mittiges, hutförmiges Teil 23, auf dessen Umfangsflansch 24 eine Dichtscheibe 26 aufliegt. Der hutförmige Teil 23 stützt sich über eine Federstütze 27 am Boden 18 ab. Die Dichtscheibe 26 ist von einer Druckfeder 28 bzw. Überdruckventilfeder beaufschlagt, die sich andernends an einer Hülse 29 abstützt, die in einem einen axialen Anschlag 34 für die Hülse 29 besitzenden Führungszylinder 31 axial auf- und abbewegbar geführt ist. Der Führungzylinder 31 ist am dem Ventilkörper 22 abgewandten Ende des Innenteils 14 befestigt. Bodenseitig sind in den Kraftfahrzeugkühler beziehungsweise Behälter weisende Öffnungen 32 vorgesehen. Außerdem besitzt der Innenteil 14 außenumfangsseitig und dem durchmesserkleineren Führungszylinder 31 gegenüberliegend Öffnungen 33, die mit der Außenatmosphäre in Verbindung stehen. Bei vom Dichtsitz 21 abgehobenen Ventilkörper 22 ergibt sich eine Strömungsverbindung zwischen dem Kühler-bzw. Behälterinneren und der Außenluft.

In der Hülse 29 ist ein Druckstück 36 bewegungsschlüssig aufgenommen, das andernends in eine Kammer 39 im Außenteil 12 ragt und eine Rollen- beziehungsweise Walzenaufnahme 37 besitzt. In dieser Aufnahme 37 des Druckstücks 36 ist eine Rolle beziehungsweise Walze 38 frei drehbar gelagert bzw. eingelegt. Die Walze 38 liegt zumindest teilweise innerhalb der hier horizontalen zylindrischen Kammer 39, die an ihrem offenen Ende mithilfe eines leicht abnehmbaren Kupplungsstücks 61, an dem ein beispielsweise zum Motor führender Schlauch 62 befestigt ist, druckdicht verschließbar ist. Innerhalb der Zylinderkammer 39 ist ein Kolben 46 in Richtung des Doppelpfeils A und damit senkrecht zur Bewegung des Druckstücks gemäß Doppelpfeil B hin- und herbewegbar geführt. Zwischen dem Kupplungsstück 61 und dem gegenüberliegenden Ende des Kolben 46 ist eine Schaltfeder 49 (Fig. 2 A) vorgesehen. Das dem Kupplungsstück 61 abgewandte Ende 63 des Kolbens 46 ist in einer Sacklochbohrung 64 am anderen Ende der Handhabe 13 geführt. Das durchmesserkleinere Ende des Kolbens 46 ist von einer Druckfeder 65 umgeben, die sich andernends am Grund der Sacklochbohrung 64 abstützt. Der Kolben 46 besitzt dem Druckstück 36 zugewandt eine Auflaufschräge 48, an der die Walze 38 des Druckstücks 36 anliegt. Der Anlaufschräge 48 gegenüberliegend ist der Kolben 46 mit zwei Ausnehmungen 51 versehen, in denen je eine Rolle oder Walze 50 frei drehbar eingelegt ist, welche Walzen 50 sich an der Innenwandung der Kammer 39 abrollend abstützen.

Die Wirkungsweise der Steuerung der Überdruckventilanordnung 11 des Verschlußdeckels 10 ist folgende: wird das Kupplungsstück 61 mit dem eine Unterdruckleitung zum Motorraum darstellenden Schlauch 62 in die Zylinderkammer 39 der Handhabe 13 des Verschlußdeckels 10 eingerastet, wird die Schaltfeder 49 mechanisch vorgespannt, so daß diese ausgehend von der Position der Figur 1 den Kolben 46 nach innen drückt. Dadurch wird über die Auflaufschräge 48 und die Walze 38 das Druckstück 36 in Richtung des Pfeiles B1 (nach unten) bewegt, so daß die Überdruckventilfeder 28 vorgespannt wird. Auf diese Weise erhält der Ventilkörper 22 einen erhöhten Öffnungsdruck.

Da beim Start des Kraftfahrzeugmotors Unterdruck entsteht, wird der in der Kammer 39 druckdicht geführte Kolben 46 in Richtung des Pfeiles A2 gezogen, wodurch der Kolben 46 sich in die Stellung gemäß Figur 1 zurückzieht. Dadurch wird unter der Wirkung der Druckfeder 28 das Druckstück 36 in Richtung des Pfeiles B2 (nach oben) bewegt, so daß sich die Druckfeder 28 etwas entspannt. Dadurch ergibt sich für den Ventilkörper 22 ein geringerer Öffnungsdruck, der üblicherweise etwa bei 1,4 bar eingestellt ist. Nach dem Abstellen des Kraftfahrzeugmotors liegt am Kolben 46 kein Unterdruck mehr an, so daß dann die Schaltfeder 49 den Kolben 46 wieder in Richtung des Pfeiles A1 entgegen der Wirkung der Feder 65 bewegen kann. Auf diese Weise ist die Überdruckventilfeder 28 wiederum gespannt, so daß sich ein auf beispielsweise 2,0 bar erhöhter Öffnungsdruck für den Ventilkörper 22 ergibt. Dadurch kann der Ventilkörper 22 einem durch die Stauwärme aufgrund des abgestellten Motors sich ergebenden höheren Kühler- beziehungsweise Behälterinnendruck standhalten.

Wird zum Öffnen des Verschlußdeckels 10, beispielsweise zum Nachfüllen von Kühlflüssigkeit das Kupplungsstück 61 abgekuppelt, entspannt sich die Schaltfeder 49 vollständig, so daß die Überdruckventilfeder 28 durch Eigenkraft in oben beschriebener Weise auf den Normalbetrieb-Öffnungsdruck von beispielsweise 1,4 bar umschaltet. Wird nach dem Wiederaufschrauben des Verschlußdeckels 10 vergessen, das Kupplungsstück 61 mit dem Verschlußdeckel 10 zu koppeln, bleibt automatisch der niedrigere Normalbetrieb-Öffnungsdruck erhalten, so daß das Kraftfahrzeug nach wie vor genutzt werden kann.

Eine ratschenartig arbeitende Verdrehvorrichtung bzw. Drehverbindungsvorrichtung 80 zwischen dem Außenteil 12 und dem das Außengewindeteil 17 aufweisenden Innenteil, mit dem die Überdruckventilanordnung 11 verbunden ist, besitzt ein Kopplungsteil in Form eines Kopplungsbolzens 82. Dem in der Handhabe 13 an einem Umfangsbereich angeordneten, axial bewegbaren Kopplurigsbolzen 82 gegenüberliegend ist in einer oberen Wandung 83 des Außengewindeteils 17 ein Ring axialer Bohrungen 84 vorgesehen, in dessen jeweils eine Bohrung 84 zur drehschlüssigen Kopplung von Handhabe 13 und Außengewindeteil 17 das innere freie Ende 90 des Kopplungsbolzens 82 wahlweise eingreift. In dieser Position kann der Verschlußdeckel 10 vom Kühlerstutzen abgenommen werden. Der Kopplungsbolzen 82 ist an einer in die Bohrung 86 der Handhabe 13 gehaltenen Lagerhülse 88 auf- und abbewegbar geführt und an seinem bewegungsfesten Bund von einer Druckfeder 85 zum Bohrungskranz 83 hin beaufschlagt. Der Kopplungsbolzen 82, der an seinem in die Bohrung 84 eintauchenden Ende 90 an einem Umfangsbereich über etwa 180° eine Schrägfläche 89 besitzt, kann über einen Kopf schlitz 87 mit einem Schraubendreher gemäß Figur 2B nach links oder rechts um 180° gedreht werden. Auf diese Weise ist entsprechend der Stellung der Schrägfläche der Kopplungsbolzen 82 bei Rechts- oder Linksdrehung der Handhabe 13 mit der Bohrung 84 in Eingriff, während er sich in der jeweiligen Gegenrichtung nach Art einer Ratsche frei durchdrehen kann, was durch Rückfedern des Kopplungsbolzens 82 gegen die Wirkung der ihn beaufschlagenden Druckfeder 85 erreicht ist.

Bei dem in den Figuren 3A, 3B, 4 und 5 dargestellten zweiten Ausführungsbeispiel ist das Druckstück 136 der Druckfeder 128 abgewandt von einer Stellfeder 154 beaufschlagt, die sich einenends am Druckstück 136 und andernends an der Innenwandung der Handhabe 113 zentrierend abstützt. Das Druckstück 136 ist mittig an einer Membran 155 axial beweglich gelagert, wobei der Umfangsrand der Membran 155 zwischen der Handhabe 113 und dem Außengewindeteil 117 eingespannt ist. Gegenüber dem Druckstück 36 besitzt dieses Druckstück 136 eine in Draufsicht gesehen größere Oberfläche und ragt wesentlich in die Kammer 139, die mit der Unterdruckleitung zum Motor verbunden ist.

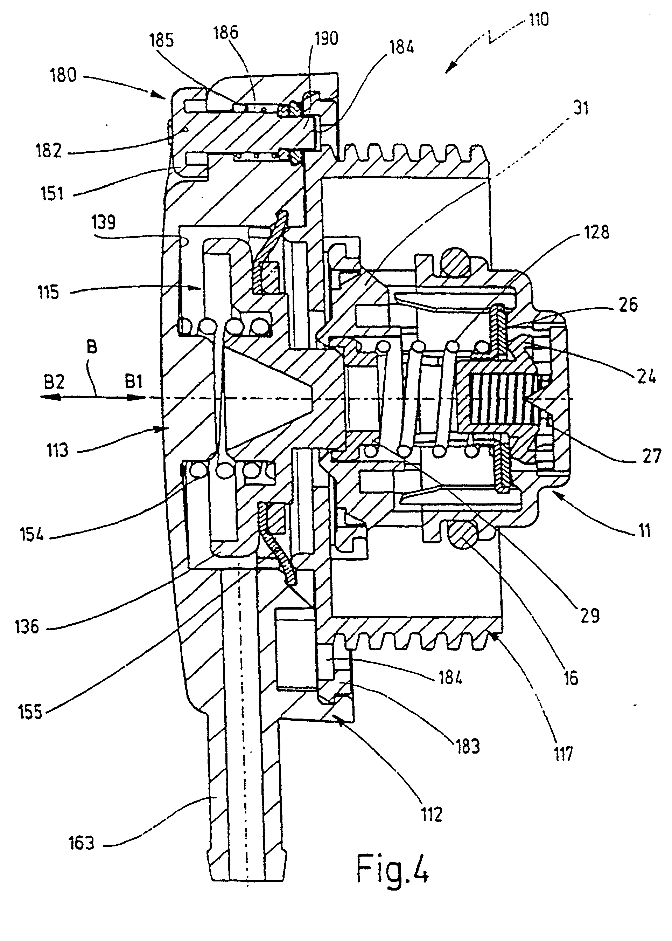

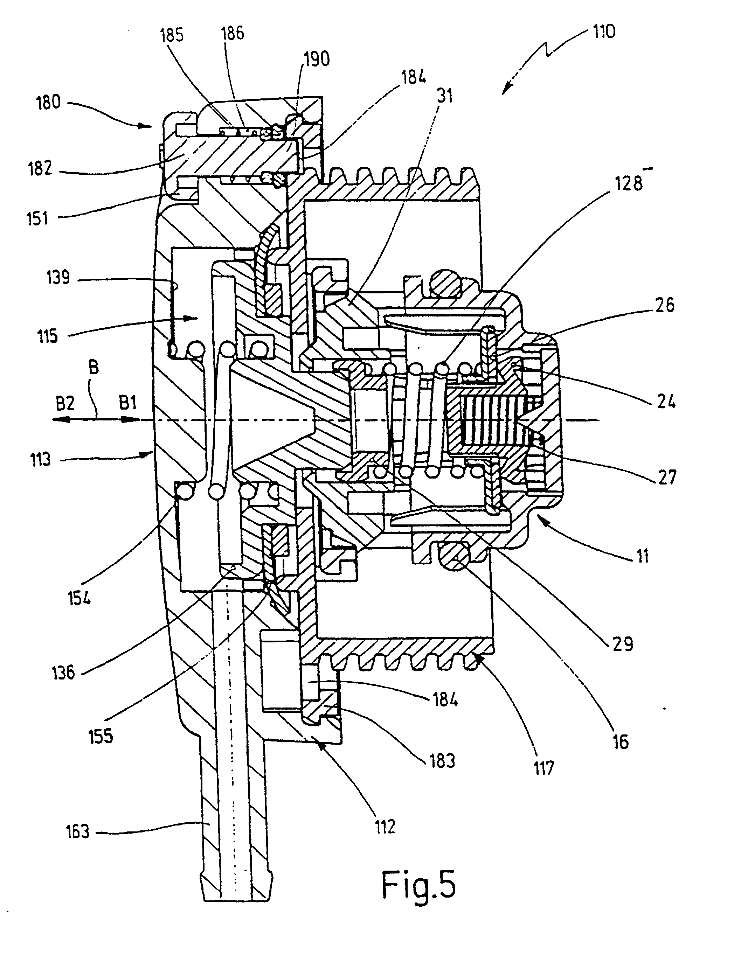

Wie beim ersten Ausführungsbeispiel spannt, wenn bei ausgeschaltetem Motor kein Unterdruck in der Kammer 139 und damit am Druckstück 136 anliegt, die Stellfeder 154, die eine größere Kraft als die Druckfeder 128 besitzt, die letztgenannte vor, so daß der Ventilkörper 122 einem Öffnungsdruck von etwa 2,0 bar standhält (Fig. 5). Sobald der Motor angelassen wird, stellt sich über die Unterdruckleitung ein Unterdruck in der Kammer 139 und damit auf das Druckstück 136 ein, was zur Folge hat, daß das Druckstück 136 in die Unterdruckkammer 139 bis zu einem gemäß Figur 4 dargestellten Anschlag eingesaugt wird. Dadurch wird die Stellfeder 154 gespannt und die Druckfeder 128 entspannt, so daß der Ventilkörper 122 nur noch einem Öffnungsdruck von etwa 1,4 bar standhält. Diese Stellung besteht solange, wie der Motor läuft und dadurch Unterdruck erzeugt. Bei Abschalten des Motors erfolgt die Rückstellung in die Position gemäß Figur 5. Die Membran 155 bewirkt dabei eine Abdichtung zwischen der Unterdruckkammer 139 und dem übrigen Verschlußdeckelraum bzw. dem Innern des Kühlerbehälters und außerdem eine elastische Bewegungsverbindung bzw. -anordnung des Druckstücks 136 innerhalb des Verschlußdeckels 110.

Bei dem in den Figuren 3 bis 5 dargestellten Verschlußdeckel 110 ist die Handhabe 113 mit einem festen Rohrstück 163 für einen Schlauch und nicht mit einem Kupplungsstück versehen. Bei diesem Ausführungsbeispiel verbleibt somit zum Auf- bzw. Abdrehen des Verschlußdeckels 110 auf den bzw. vom Kühlmittelbehälterstutzen eine Verbindung zwischen Handhabe 113 und dem hier nicht dargestellten Schlauch, bestehen.

Um bei einer solchen festen Verbindung zwischen Verschlußdeckel und Schlauch ein Festdrehen bzw. Lösen des Verschlußdeckels 110 zu erreichen, ist die ratschenartige Drehverbindungsvorrichtung 180 zwischen Außenteil 112 und Außengewindeteil 117 vorgesehen. Diese Ratschenverbindung 180 besitzt wie beim ersten Ausführungsbeispiel einen Kupplungsbolzen 182, der federbeaufschlagt in eine von vielen ringförmig angeordneten Bohrungen 184 in einem Umfangsrand 183 des Außengewindeteils 117 dringt. Der Kupplungsbolzen 182 liegt innerhalb einer axialen mit einer Hinterschneidung versehenen Bohrung 186, wobei innerhalb der Hinterschneidung die Druckfeder 185 vorgesehen ist. Der Bolzen 182 ist außenendseitig einem Hebel 151 (Fig. 3A) drehfest verbunden, mittels dem der Kupplungsbolzen 182 um 180° hin- und herdrehbar ist. Das innere Ende 190 des Kupplungsbolzens 182 ist mit einer Schrägfläche 189 versehen, die entsprechend der Stellung des Hebels 191 gemäß Figur 3 B nach links oder rechts zeigend angeordnet ist.

Auf diese Weise ist auch der Verschlußdeckel 110 (wie der Verschlußdeckel 10) durch Hin- und Herdrehen je nach Stellung des Hebels 191 auf den Behälterstutzen aufschraubbar oder von diesem abschraubbar. Mit anderen Worten, entsprechend der Stellung des Hebels 191 und damit der Stellung der Schrägfläche 189 ist in die eine Richtung eine drehfeste Verbindung zwischen Handhabe 113 und Außengewindeteil 117 vorhanden, während in der anderen Richtung eine freilaufende Ratschenwirkung dadurch erreicht ist, daß durch die Schrägfläche 189 und die Druckfeder 185 der Kopplungsbolzen 182 entgegen der Wirkung der Druckfeder aus der Bohrung 184 gelangen kann.

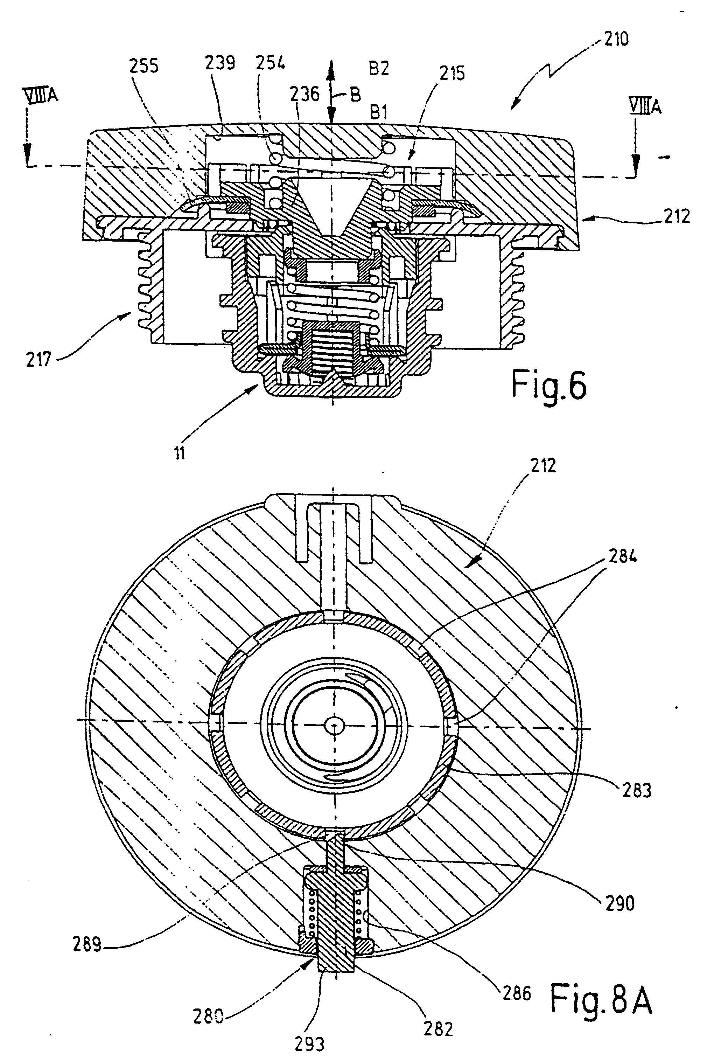

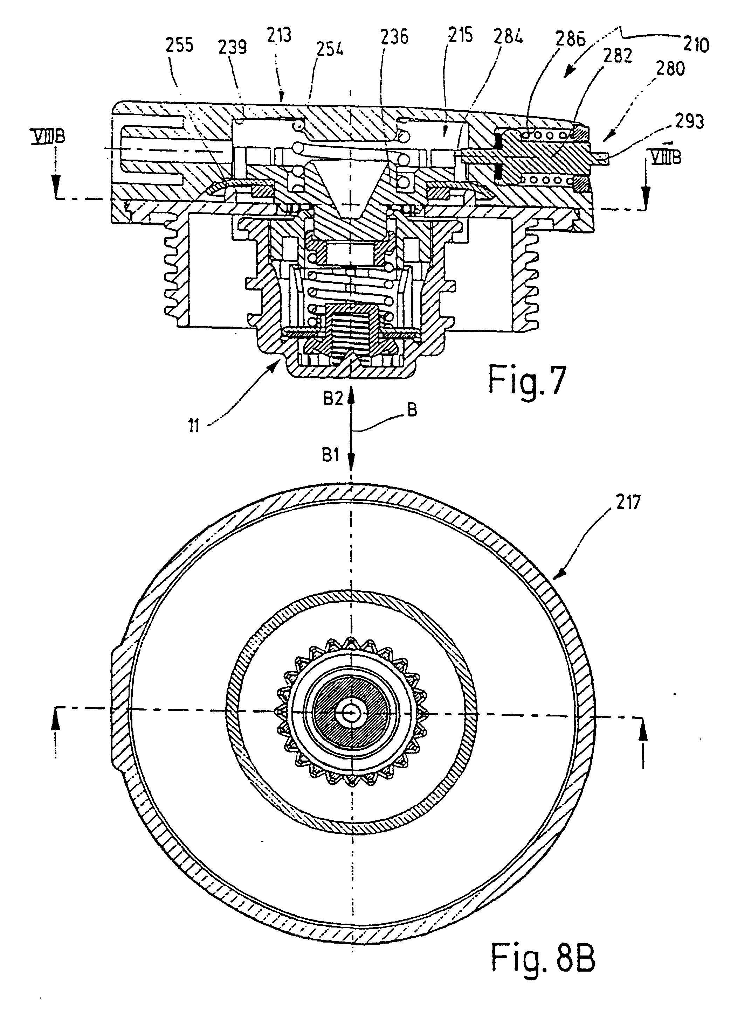

Die Figuren 6 bis 8 zeigen einen Verschlußdeckel 210, dessen Funktion im wesentlichen dem Verschlußdeckel 110 nach den Figuren 3 bis 5 entspricht. Der wesentliche Unterschied besteht in der Ausgestaltung der ratschenartigen Drehverbindungsvorrichtung 280, die beim Ausführungsbeispiel nach den Figuren 6 bis 8 an einem Umfangsbereich radial angreift. Hierzu ist der Kopplungsbolzen 282 in einer radialen nach außen verschlossenen Bohrung 286 der Handhabe 213 federbelastet derart angeordnet, daß er in Richtung nach innen vorgespannt ist, so daß sein mit einer Schrägfläche 289 versehenes Ende 290 stets in eine Bohrung 284 eines mit mehreren derartiger Bohrungen 284 versehenen, vom Innenteil 214 abstehenden und mit diesem drehfest verbundenen Kranzes bzw. Ringes 283 (Figur 8B) eingreift. Das äußere Ende des Kopplungsbolzens 282 ist mit einer Griffleiste 293 versehen, mittels der der Kopplungsbolzen 282 um jeweils 180° in die entsprechende Kupplungsstellung, das heißt für das Abschrauben oder Aufschrauben verdrehbar ist.

Die bei den Ausführungsbeispielen nach den Figuren 1 und 2, 3 bis 5 und 6 bis 8 dargestellte ratschenartige Drehverbindungsvorrichtung 80, 180 bzw. 280 ist gemäß einem oder mehreren in der Zeichnung nicht dargestellten weiteren Ausführungsbeispielen mit einer druck- oder temperaturabhängig gesteuerten Verdrehsicherung kombiniert. Mit einer derartigen Verdrehsicherung wird erreicht, dass eine drehfeste Verbindung zwischen Handhabe 13, 113 oder 213 und dem Außengewindeteil 17, 117 oder 217 nur dann vorhanden ist, wenn die Temperatur im Kühlmittelbehälter so niedrig ist, dass keine Verbrühungs- oder sonstige Gefahr beim Abschrauben des Verschlußdeckels besteht.

Bspw. ist die ratschenartige Drehverbindungsvorrichtung 80, 180 und/oder 280 temperaturabhängig derart gesteuert, dass der Kopplungsbolzen 82, 182 bzw. 282 an einem Ende von einer temperaturabhängigen Memoryfeder und am anderen Ende mit einer Rückstellfeder beaufschlagt ist, was bewirkt, dass bei vorbestimmter zu hoher Temperatur im Kühlmittelbehälter der Kopplungsbolzen aus der betreffenden Rastbohrung 84, 184 bzw. 284 ausgedrückt wird bzw. freikommt.

Eine andere Variante einer temperaturabhängig gesteuerten Verdrehsicherung besteht darin, dass der Bohrungskranz 83, 183 bzw. 283 in der zum Kopplungsbolzen beschriebenen Art und Weise gegenüber diesem ein- bzw. ausrückbar angeordnet gesteuert ist.

Es versteht sich, daß ein derartiger Verschlußdeckel auch bei Ausgleichsbehältern von Kühl- oder Heizsystemen o.dgl. Verwendung finden kann.

## Patentansprüche

1. Verschlußdeckel (10, 110, 210 für einen ortsfesten Stutzen eines Behälters, insbesondere Kraftfahrzeugkühlers, mit einem Deckelinnenteil (14), das eine Strömungsverbindung zwischen dem Behälterinneren und dem Behälteräußeren und eine Ventilanordnung (11) zum Freigeben und Sperren der Strömungsverbindung aufweist, wobei ein hin und her bewegbarer Ventilkörper (22) der Ventilanordnung (11) zum Behälterinneren hin gegen einen Dichtsitz (21) am Deckelinnenteil (14) unter Vorspannung derart gedrückt ist, daß er bei Überschreiten eines Grenzwertes des Behälterinnendrucks vom Dichtsitz (21) abhebbar ist, wobei die Vorspannung, mit der der Ventilkörper (22) gegen den Dichtsitz (21) gedrückt ist, mittels eines gesteuerten Antriebs (15, 115, 215) einstellbar ist, **dadurch gekennzeichnet, daß** der Antrieb (15, 115, 215) für die Vorspannung des Ventilkörpers (22) unterdruckgesteuert ist.

2. Verschlußdeckel nach Anspruch 1, **dadurch gekennzeichnet, daß** der gesteuerte Antrieb (15) ein die Antriebsbewegung auf das Druckstück (36) umlenkendes Element (46) aufweist.

3. Verschlußdeckel nach Anspruch 2, **dadurch gekennzeichnet, daß** der gesteuerte Antrieb (15) durch eine Kolbenzylindereinheit (46, 39) gebildet ist, deren Kolben (46) zwischen zwei endseitigen Federn (49, 65) gehalten und mit einer dem Druckstück (36) zugewandten Auflaufschräge (48) versehen ist.

4. Verschlußdeckel nach Anspruch 3, **dadurch gekennzeichnet, daß** zwischen der Auflaufschräge (48) des Kolbens (46) und dem Druckstück (36) ein Rollelement (38) angeordnet ist.

5. Verschlußdeckel nach Anspruche 1, **dadurch gekennzeichnet, daß** der gesteuerte Antrieb (115, 215) durch eine Anordnung gebildet ist, die eine federbelastete Membran (155) aufweist, deren axiale Bewegung den Ventilkörper (22) vorspannt.

6. Verschlußdeckel nach Anspruch 5, **dadurch gekennzeichnet, daß** das Druckstück (136, 236) mittels der Membran (155) zwischen einem Außenteil (112, 212) und einem Außengewindeteil (117, 217) axial beweglich eingespannt und von einer sich an der Handhabe (113, 213) abstützenden Druckfeder (154, 254) vorgespannt ist.

7. Verschlußdeckel nach mindestens einem der vorhergehenden Ansprüche, **dadurch gekennzeichnet, daß** der unterdruckgesteuerte Antrieb (15) mit einem zum Motor führenden Schlauch verbindbar bzw. verbunden ist.

8. Verschlußdeckel nach Anspruch 7, **dadurch gekennzeichnet, daß** dessen Handhabe (113, 213) mit einem festen. Schlauchanschlußstück (261) versehen ist.

9. Verschlußdeckel nach Anspruch 8, **dadurch gekennzeichnet, daß** zwischen der Handhabe (13, 113, 213) und dem Außengewindeteil (17, 117, 217) eine ratschenartige Drehverbindungsvorrichtung (80, 180, 280) vorgesehen ist, die drehrichtungsabhängig einstellbar ist.

10. Verschlußdeckel nach Anspruch 9, **dadurch gekennzeichnet, daß** die ratschenartige Drehverbindungsvorrichtung (80, 180, 280) axial angeordnet ist.

11. Verschlußdeckel nach Anspruch 9, **dadurch gekennzeichnet, daß** die ratschenartige Drehverbindungsvorrichtung (80, 180, 280) radial angeordnet ist.

12. Verschlußdeckel nach mindestens einem der Ansprüche 9 bis 11, **dadurch gekennzeichnet, daß** die ratschenartige Drehverbindungsvorrichtung (80, 180, 280) einen Kopplungsbolzen (82, 182, 282) aufweist, der in einer Ausnehmung (86, 186, 286) der Handhabe (13, 113, 213) in seiner axialen Richtung federnd beweglich gehalten ist.

13. Verschlußdeckel nach Anspruch 12, **dadurch gekennzeichnet, daß** der Kopplungsbolzen (82, 182, 282) an seinem in das Außengewindeteil (17, 117, 217) eintauchenden Ende (90, 190, 290) einseitig mit einer Schrägfläche (89, 189, 289) versehen ist und in seiner Ausnehmung (86, 186, 286) um vorzugsweise einen Winkel von +/- 180° verdrehbar ist.

14. Verschlußdeckel nach Anspruch 13, **dadurch gekennzeichnet, daß** der Kopplungsbolzen (82, 182, 282) mit einem Drehhebel (191) drehfest verbunden ist.

15. Verschlußdeckel nach Anspruch 13 oder 14, **dadurch gekennzeichnet, daß** das Außengewindeteil (17, 117, 217) einen Kranz (83, 183, 283) mit Bohrungen (84, 184, 284) aufweist, in die der Kopplungsbolzen (82, 182, 282) eingreifen kann.

16. Verschlußdeckel nach Anspruch 9, **dadurch gekennzeichnet, dass** eine Verdrehsicherung in die ratschenartige Drehverbindungsvorrichtung (80, 180, 280) integriert ist.

17. Verschlußdeckel nach mindestens einem der vorhergehenden Ansprüche, **dadurch gekennzeichnet, daß** der Ventilkörper (22) dem Antrieb (15, 115, 215 abgewandt durch eine Feder (28, 128, 228) vorgespannt ist, die sich an ihrem dem Ventilkörper (22) abgewandten Ende an einem Druckstück (36, 136, 236.) abstützt, das mittels des gesteuerten Antriebs (15, 115, 215). axial bewegbar ist.

## Claims

1. Cover (10, 110, 210) for a locally fixed feed pipe of a container, particularly a motor vehicle radiator, having a cover inner part (14) with a flow connection between the container interior and the container exterior and a valve arrangement (11) for freeing and blocking the flow connection, whereby a valve body (22) movable back and forth of the valve arrangement (11) is pressed towards the container interior against a sealing seat (21) on the lid inner part (14) under tension in such a manner that on undershooting a limit value of the container internal pressure, it may be lifted off the sealing seat (21), whereby the pretension with which the valve body (22) is pressed against the sealing seat (21) is adjustable by means of a controlled drive (15, 115, 215), **characterised in that** the drive (15, 115, 215) for the pretensioning of the valve body (22) is underpressure-controlled.

2. Cover according to Claim 1, **characterised in that** the controlled drive (15) has an element (46) diverting the drive movement onto the compression member (36).

3. Cover according to Claim 2, **characterised in that** the controlled drive (15) comprises a piston cylinder unit (46, 39), whose piston (46) is held between two springs (49, 65) situated at the ends and is provided with a support incline (48) facing towards the compression member (36).

4. Cover according to Claim 3, **characterised in that** arranged between the support incline (48) of the piston (46) and the compression member (36) is a roller element (38).

5. Cover according to Claim 1, **characterised in that** the controlled drive (115, 215) comprises an arrangement having a spring-loaded membrane (155) whose axial movement pretensions the valve body (22).

6. Cover according to Claim 5, **characterised in that** the compression member (136, 236) is clamped axially movable by means of the membrane (155) between an outer part (112, 212) and an outer threaded part (117, 217) and is pretensioned by a compression spring (154, 254) supported on the handle (113, 213).

7. Cover according to at least one of the previous claims, **characterised in that** the underpressure-controlled drive (15) may be connected or is connected with a hose leading to the engine.

8. Cover according to Claim 7, **characterised in that** its handle (113, 213) is provided with a fixed hose attachment piece (261).

9. Cover according to Claim 8, **characterised in that** between the handle (13, 113, 213) and the outer threaded part (17, 117, 217), a ratchet-type rotation connection device (80, 180, 280) is provided, which is adjustable dependent upon the rotation direction.

10. Cover according to Claim 9, **characterised in that** the ratchet-type rotation connection device (80, 180, 280) is arranged axially.

11. Cover according to Claim 9, **characterised in that** the ratchet-type rotation connection device (80, 180, 280) is arranged radially.

12. Cover according to at least one of the claims 9 to 11, **characterised in that** the ratchet-type rotation connection device (80, 180, 280) has a coupling bolt (82, 182, 282) which is held in a recess (86, 186, 286) of the handle (13, 113, 213) movably sprung in its axial direction.

13. Cover according to Claim 12, **characterised in that** the coupling bolt (82, 182, 282) is provided on its end (90, 190, 290) penetrating into the outer threaded part (17, 117, 217) on one side with an inclined surface (89, 189, 289) and is rotatable in its recess (86, 186, 286) through an angle of, for instance, ±180°.

14. Cover according to Claim 13, **characterised in that** the coupling bolt (82, 182, 282) is non-rotatably fixed to a rotation lever (191).

15. Cover according to Claim 13 or 14, **characterised in that** the outer threaded part (17, 117, 217) has a ring (83, 183, 283) with bores (84, 184, 284) in which the coupling bolt (82, 182, 282) may engage.

16. Cover according to Claim 9, **characterised in that** an anti-twist lock is integrated into the ratchet-type rotation connection device (80, 180, 280).

17. Cover according to at least one of the previous claims, **characterised in that** the valve body (22) facing away from the drive (15, 115, 215) is pretensioned by a spring (28, 128, 228) which is supported on its end facing away from the valve body (22) on a compression member (36, 136, 236) which is axially movable by means of the controlled drive (15, 115, 215).

## Revendications

1. Couvercle d'obturation (10, 110, 210) pour une tubulure fixe d'un conteneur, en particulier un radiateur de véhicule automobile, avec une partie intérieure de couvercle (14), qui comprend une liaison d'écoulement entre l'intérieur du conteneur et l'extérieur du conteneur et un ensemble de vannes (11) pour libérer et pour bloquer la liaison d'écoulement, un corps de vanne (22) de l'ensemble de vannes (11), qui peut être déplacé dans un sens et dans l'autre, étant poussé de telle manière vers l'intérieur du conteneur avec une précontrainte contre un siège d'étanchéité (21) se trouvant sur la partie intérieure du couvercle (14) qu'en cas de dépassement d'une valeur limite de la pression intérieure du conteneur il puisse être décollé du siège d'étanchéité (21), la précontrainte avec laquelle le corps de vanne (22) est poussé contre le siège d'étanchéité (21) étant réglable à l'aide d'un élément d'entraînement commandé (15, 115, 215), **caractérisé en ce que** l'élément d'entraînement (15, 115, 215) pour la précontrainte du corps de vanne (22) est commandé par dépression.

2. Couvercle d'obturation selon la revendication 1, **caractérisé en ce que** l'élément d'entraînement commandé (15) comprend un élément (46), qui dévie le mouvement d'entraînement sur la pièce de compression (36).

3. Couvercle d'obturation selon la revendication 2, **caractérisé en ce que** l'élément d'entraînement commandé (15) est constitué par une unité formée par un piston et un cylindre (46, 39), dont le piston (46) est maintenu entre deux ressorts d'extrémité (49, 65) et est muni d'un chanfrein d'entrée (48) dirigé vers la pièce de compression (36).

4. Couvercle d'obturation selon la revendication 3, **caractérisé en ce qu'**entre le chanfrein d'entrée (48) du piston (46) et la pièce de compression (36) est disposé un élément de roulement (38).

5. Couvercle d'obturation selon la revendication 1, **caractérisé en ce que** l'élément d'entraînement commandé (115, 215) est formé par un ensemble comprenant une membrane (155) commandée par un ressort, dont le mouvement axial met en précontrainte le corps de vanne (22).

6. Couvercle d'obturation selon la revendication 5, **caractérisé en ce que** la pièce de compression (136, 236) est serrée à l'aide de la membrane (155), avec une possibilité de déplacement axial, entre une partie extérieure (112, 212) et une partie filetée extérieure (117, 217) et est mise en précontrainte par un ressort de compression (154, 254) s'appuyant sur la partie de préhension (113, 213).

7. Couvercle d'obturation selon au moins l'une des revendications précédentes, **caractérisé en ce que** l'élément d'entraînement commandé par dépression (15) peut être relié ou est relié à un tuyau menant au moteur.

8. Couvercle d'obturation selon la revendication 7, **caractérisé en ce que** sa partie de préhension (113, 213) est munie d'un raccord de tuyau fixe (261).

9. Couvercle d'obturation selon la revendication 8, **caractérisé en ce qu'**entre la partie de préhension (13, 113, 213) et la partie filetée extérieure (17, 117, 217) est prévu un dispositif de liaison tournante en forme de cliquet (80, 180, 280), qui peut être ajusté en fonction de la direction de rotation.

10. Couvercle d'obturation selon la revendication 9, **caractérisé en ce que** le dispositif de liaison tournante en forme de cliquet (80, 180, 280) est disposé dans le sens axial.

11. Couvercle d'obturation selon la revendication 9, **caractérisé en ce que** le dispositif de liaison tournante en forme de cliquet (80, 180, 280) est disposé dans le sens radial.

12. Couvercle d'obturation selon au moins l'une des revendications 9 à 11, **caractérisé en ce que** le dispositif de liaison tournante en forme de cliquet (80, 180, 280) comprend un pivot d'accouplement (82, 182, 282), qui est maintenu avec une possibilité de déplacement souple dans sa direction axiale dans un évidement (86, 186, 286) de la partie de préhension (13, 113, 213).

13. Couvercle d'obturation selon la revendication 12, **caractérisé en ce que** sur son extrémité (90, 190, 290) pénétrant dans la partie filetée extérieure (17, 117, 217) le pivot d'accouplement (82, 182, 282) est muni unilatéralement d'une surface chanfreinée (89, 189, 289) et peut être pivoté dans son évidement (86, 186, 286) de préférence de la valeur d'un angle de +/- 180°.

14. Couvercle d'obturation selon la revendication 13, **caractérisé en ce que** le pivot d'accouplement (82, 182, 282) est relié en solidarité de rotation avec un levier tournant (191).

15. Couvercle d'obturation selon la revendication 13 ou 14, **caractérisé en ce que** la partie filetée extérieure (17, 117, 217) comprend une couronne (83, 183, 283) avec des forures (84, 184, 284), dans lesquelles peut s'engager le pivot d'accouplement (82, 182, 282).

16. Couvercle d'obturation selon la revendication 9, **caractérisé en ce qu'**une protection anti-torsion est intégrée dans le dispositif de liaison tournante en forme de cliquet (80, 180, 280).

17. Couvercle d'obturation selon au moins l'une des revendications précédentes, **caractérisé en ce qu'**en opposition à l'élément d'entraînement (15, 115, 215), le corps de vanne (22) est mis en précontrainte par un ressort (28, 128, 228), dont l'extrémité opposée au corps de vanne (22) s'appuie sur une pièce de compression (36, 136, 236), qui peut être déplacée dans le sens axial à l'aide de l'élément d'entraînement commandé (15, 115, 215).
